# EUROPEAN PATENT APPLICATION

(11) **EP 4 450 310 A1**
(43) Date of publication of application: **23.10.2024**
(21) Application number: 22907320.0
(22) Date of filing: 07.12.2022
(51) Int. Cl.: B60K 1/04, B60K 1/00, B60K 11/04, B60L 50/60, B60L 53/16, B62D 49/00

(54) **ELECTRIC WORK VEHICLE**

(30) Priority: 14.12.2021 JP 2021202898; 14.12.2021 JP 2021202899
(71) Applicant: Kubota Corporation, Osaka 556-8601 (JP)
(72) Inventor: YAMAGUCHI, Tatsuya, Sakai-shi, Osaka 590-0908 (JP); TOGO, Manabu, Sakai-shi, Osaka 590-0908 (JP); SHIRAKI, Hiroshi, Sakai-shi, Osaka 590-0908 (JP); YASUI, Daiki, Sakai-shi, Osaka 590-0908 (JP); MANTOKU, Naoto, Sakai-shi, Osaka 590-0908 (JP)
(74) Representative: Bittner, Thomas L.
(86) International application number: PCT/JP2022/045087
(87) International publication number: WO 2023/112793

(57) **Abstract**

An electric work vehicle includes a battery (4), a motor driven by electric power supplied from the battery (4), a travel device (10) driven by the motor, an input section (50) that is provided on a side portion of the battery (4) and receives electric power to be supplied to the battery, a connection section (52) to which a charger is connectable, and an electric cable (51) electrically connecting the connection section (52) and the input section (50), and the connection section (52) is provided at a position adjacent to the side portion of the battery (4) on which the input section (50) is provided.

## Description

### Technical Field

The present invention relates to an electric work vehicle that includes a battery and a motor driven by electric power supplied from the battery.

### Background Art

The electric work vehicle disclosed in Patent Document 1 is known as an example of the above-described electric work vehicle. This electric work vehicle (a "tractor" in Patent Document 1) can travel using travel devices ("front wheels" and "rear wheels" in Patent Document 1) driven by the motor.

### Prior Art Documents

### Patent Documents

Patent Document 1: JP 2021-953A

### Disclosure of the Invention

### Problem to be Solved by the Invention

The electric work vehicle disclosed in Patent Document 1 may be configured such that a battery is provided with an input section to which electric power to be supplied to the battery is input, and to include a connection section to which a charger is connectable and an electric cable electrically connecting the connection section and the input section. With this configuration, the battery can be charged using the charger.

However, it is necessary to use a relatively long electric cable depending on the position of the connection section. For example, if the input section is provided on a portion on one side of the battery and the connection section is provided near a portion on the other side of the battery, a relatively long electric cable is likely to be used.

It is an object of the present invention to provide an electric work vehicle that relatively easily achieves a reduction in the length of the electric cable electrically connecting the connection section and the input section.

The electric work vehicle disclosed in Patent Document 1 may include a connection section to which a charger is connectable and that is electrically connected to a battery. With this configuration, the battery can be charged using the charger.

However, the connection section to which the charger is connectable is likely to have relatively low strength. Accordingly, it is necessary to prevent interference of the connection section with other members during operations other than a charging operation in which the charger is used.

When a dedicated protection member for protecting the connection section is provided in order to prevent the interference of the connection section with other members, the production cost is likely to increase.

It is another object of the present invention to provide an electric work vehicle that enables charging of the battery using the charger and easily achieves suppression of an increase in production cost.

### Means for Solving Problem

The following describes means for solving the problem [1].

An electric work vehicle according to the present invention is characterized by including: a battery; a motor configured to be driven by electric power supplied from the battery; a travel device configured to be driven by the motor; an input section provided on a side portion of the battery, and configured to receive electric power to be supplied to the battery; a connection section to which a charger is connectable; and an electric cable electrically connecting the connection section and the input section, the connection section being provided at a position adjacent to the side portion of the battery on a side on which the input section is provided.

With this configuration, the distance between the connection section and the input section is likely to be small compared to the configuration in which the connection portion is disposed near a portion on a side opposite to a portion of the battery provided with the input section. Accordingly, a reduction in the length of the electric cable is relatively easily achieved.

Therefore, with this configuration, it is possible to realize an electric work vehicle that relatively easily achieves a reduction in the length of the electric cable electrically connecting the connection section and the input section.

Also, in the present invention, it is preferable that the electric cable does not overlap the battery in a plan view.

With this configuration, there is no need to secure spaces for disposing the electric cable, above and below the battery. Accordingly, it is easy to install a relatively large battery.

Also, in the present invention, it is preferable that the connection section is disposed on a lateral side portion of a body and faces sideward of the body.

With this configuration, an operator can easily connect the charger to the connection section from one lateral side of the body. Thus, an electric work vehicle can be realized in which the battery charging operation is easy to perform.

Also, in the present invention, it is preferable that the connection section includes a connection terminal section to which the charger is connectable, and a lid that covers the connection terminal section and is openable and closable.

With this configuration, while the battery charging operation is not being performed, the lid is closed to protect the connection terminal section. Thus, an electric work vehicle can be realized in which the connection terminal section can be protected while the battery charging operation is not being performed.

Also, in the present invention, it is preferable that the lid is opened by being pivoted toward the battery.

With this configuration, it is easy to secure a wide open space around the connection terminal section while the lid is open, compared to a configuration in which the lid is opened by being pivoted away from the battery. This makes it easy to connect the charger to the connection terminal section.

Also, in the present invention, it is preferable that the electric work vehicle further includes a cover member covering the battery, the cover member is openable and closable by being pivoted about a horizontal axis, and the lid is opened by being pivoted toward the horizontal axis.

With this configuration, it is easy to secure a wide open space around the connection terminal section while the lid is open, compared to a configuration in which the lid is opened by being pivoted away from the horizontal axis. This makes it easy to connect the charger to the connection terminal section.

Also, in the present invention, it is preferable that the input section is provided on a side portion of the battery on a first side, the connection section faces toward a side opposite to a second side in a plan view, and the electric cable is disposed within a region on the first side with respect to the battery and on the second side with respect to the connection section in a plan view.

With a configuration in which high-voltage electricity is transmitted through an electric cable, even when the outer circumference of the electric cable is covered by an insulator, the operator may feel anxious about touching the electric cable.

With this configuration, when the operator stands facing the connection section, the electric cable does not protrude toward the operator from the connection section as viewed from the operator. Also, the electric cable is disposed within the region on the first side with respect to the battery. Accordingly, the arm and the like of the operator are less likely to touch the electric cable. Thus, the operator is likely to perform the charging operation free from anxiety.

Also, in the present invention, it is preferable that the electric work vehicle further includes a radiator, the battery is disposed on a third side corresponding to a side opposite to the first side with respect to the radiator, and the electric cable is disposed within a portion of the region on the third side with respect to the radiator in a plan view.

With this configuration, the electric cable is disposed within the region on the third side with respect to the radiator. Accordingly, the arm and the like of the operator are less likely to touch the electric cable. Thus, the operator is likely to perform the charging operation free from anxiety.

Also, in the present invention, it is preferable that the electric cable is disposed within a region below an upper end of the connection section.

With this configuration, the electric cable is disposed within the region below the upper end of the connection section. Accordingly, the arm and the like of the operator are less likely to touch the electric cable. Thus, the operator is likely to perform the charging operation free from anxiety.

The following describes means for solving the problem [2].

An electric work vehicle according to the present invention is characterized by including: a battery; a motor configured to be driven by electric power supplied from the battery; a travel device configured to be driven by the motor; a cover member covering the battery; and a connection section to which a charger is connectable and that is electrically connected to the battery, the cover member covering the connection section.

With this configuration, the cover member covering the battery protects the connection section. Accordingly, the connection section is protected without providing a dedicated protection member to protect the connection section. This makes it easy to suppress an increase in production cost.

Therefore, with this configuration, it is possible to realize an electric work vehicle that enables charging of the battery using the charger and easily achieves suppression of an increase in production cost.

Also, in the present invention, it is preferable that the electric work vehicle further includes a driving section in which an operator rides, the cover member is disposed in front of the driving section, the battery extends from a left end to a right end of a space enclosed by the cover member, and the connection section is disposed in front of or behind the battery.

With this configuration, there is no need to secure spaces for disposing the connection section, above and below the battery as well as on the left and right sides with respect to the battery. In addition, the battery extends from the left end to the right end of the space enclosed by the cover member. Accordingly, it is easy to install a relatively large battery.

Also, in the present invention, it is preferable that the cover member is openable and closable by being pivoted about a pivot axis extending in a lateral direction of a body, the pivot axis is located at a rear portion of the cover member, the connection section is disposed in front of the battery, and the connection section is exposed while the cover member is open.

With this configuration, the operator can access the connection section by simply pivoting the cover member open. Accordingly, it is easy to perform the charging operation using the charger and the maintenance of the connection section.

Also, in the present invention, it is preferable that the electric work vehicle further includes a driving section in which an operator rides, the cover member is disposed in front of the driving section, the cover member is provided with a headlight, and the connection section is disposed below an upper end of the headlight.

If the connection section is disposed above the upper end of the headlight, the connection section is located at a relatively high position, and therefore, it is envisaged that an operation for connecting the charger to the connection section is hard to perform.

Here, with this configuration, the connection section is disposed below the upper end of the headlight. Accordingly, it is easy to avoid a situation in which the operation for connecting the charger to the connection section is hard to perform.

Also, in the present invention, it is preferable that the electric work vehicle further includes a support member extending from the battery, and the support member supports the connection section.

In general, batteries have relatively high strength in electric work vehicles.

With this configuration, the connection section is supported by the battery having relatively high strength via the support member. This makes it easy to stably support the connection section.

Also, in the present invention, it is preferable that the electric work vehicle further includes: a radiator; and a radiator frame supporting the radiator, and the support member is coupled to the radiator frame.

With this configuration, the connection section is supported by the battery and the radiator frame via the support member. This makes it easy to stably support the connection section. Also, in the present invention, it is preferable that the electric work vehicle further includes an electric cable electrically connecting the connection section and the battery, and the support member includes an eaves-like portion located above the electric cable.

With this configuration, the eaves-like portion of the support member covers the electric cable from above. Thus, a configuration can be realized in which the support member protects the electric cable.

Also, in the present invention, it is preferable that the cover member is openable and closable by being pivoted about a pivot axis extending in a lateral direction of a body, the electric work vehicle further includes a support arm covered by the cover member, the support arm is pivotable in a vertical direction about a base end of the support arm and is capable of supporting the cover member while the cover member is open by raising the support arm and bringing a free end of the support arm into contact with the cover member from below, and the base end of the support arm is supported by the support member.

With this configuration, the base end of the support arm is supported by the battery having relatively high strength via the support member. This makes it easy to stably support the support arm.

### Brief Description of the Drawings

- FIG. 1: is a left side view of a tractor.
- FIG. 2: is a partially cutaway left side view illustrating configurations of a connection section and so forth.
- FIG. 3: is a partially cutaway plan view illustrating configurations of the connection section and so forth.
- FIG. 4: is a left side view illustrating configurations of the connection section and so forth.
- FIG. 5: is a left side view illustrating configurations of a support member and so forth.
- FIG. 6: is a plan view illustrating configurations of the support member and so forth.
- FIG. 7: is a front view illustrating configurations of the support member and so forth.
- FIG. 8: is a front view illustrating configurations of the support member and so forth.

### Best Mode for Carrying out the Invention

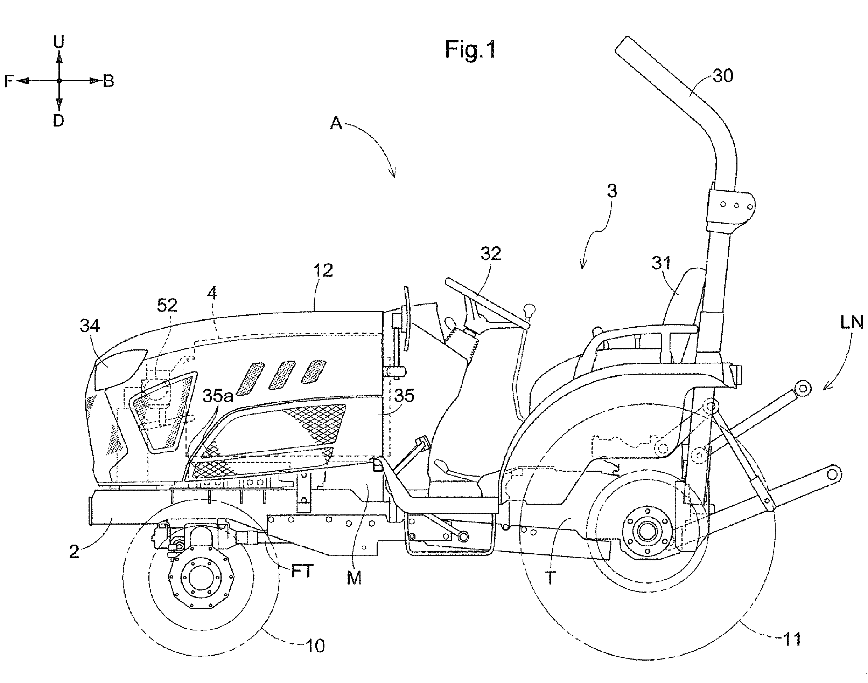

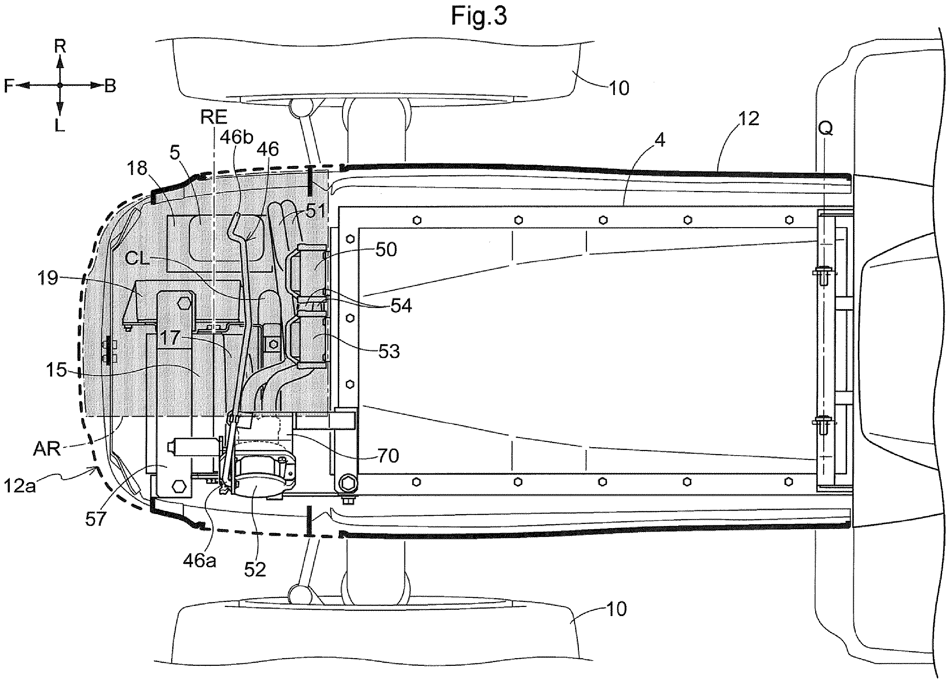

An embodiment for carrying out the present invention will be described with reference to the drawings. Note that, in the following description, the arrow F shown in FIGS. 1 to 6 indicates the "forward direction", the arrow B indicates the "rearward direction", the arrow L shown in FIGS. 3 and 6 to 8 indicates the "leftward direction", and the arrow R indicates the "rightward direction" unless otherwise stated. Also, the arrow U shown in FIGS. 1, 2, 4, 5, 7, and 8 indicates the "upward direction", and the arrow D indicates the "downward direction".

### Overall Configuration of Tractor

As shown in FIG. 1, a tractor A (corresponding to an "electric work vehicle" according to the present invention) includes left and right front wheels 10 (each corresponding to a "travel device" according to the present invention), left and right rear wheels 11 (each corresponding to a "travel device" according to the present invention), and a cover member 12.

In addition, the tractor A includes a body frame 2 and a driving section 3.

The body frame 2 is supported by the left and right front wheels 10 and the left and right rear wheels 11.

The cover member 12 is disposed at a front portion of the body. Also, the driving section 3 is provided behind the cover member 12. In other words, the cover member 12 is disposed in front of the driving section 3.

The driving section 3 includes a protection frame 30, a driver's seat 31, and a steering wheel 32. An operator can sit in the driver's seat 31. The operator is thus able to ride in the driving section 3. The left and right front wheels 10 can be steered by operating the steering wheel 32. The operator can perform various driving operations in the driving section 3.

That is to say, the tractor A includes the driving section 3 in which the operator rides.

In addition, the tractor A includes a travel battery 4 (corresponding to a "battery" according to the present invention), a motor M, a transmission device T, and a front transmission mechanism FT.

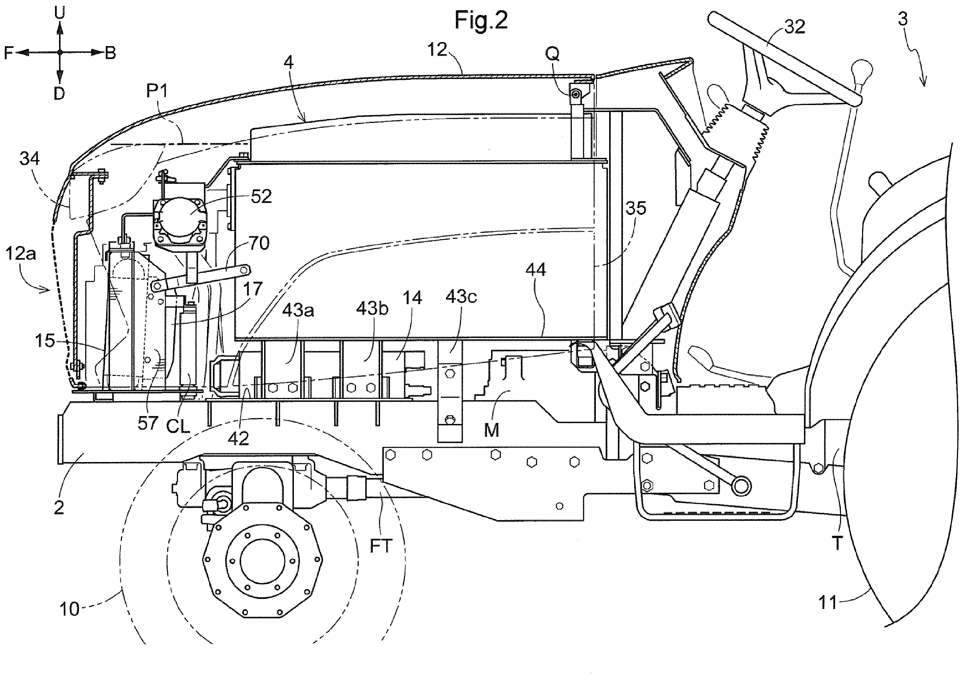

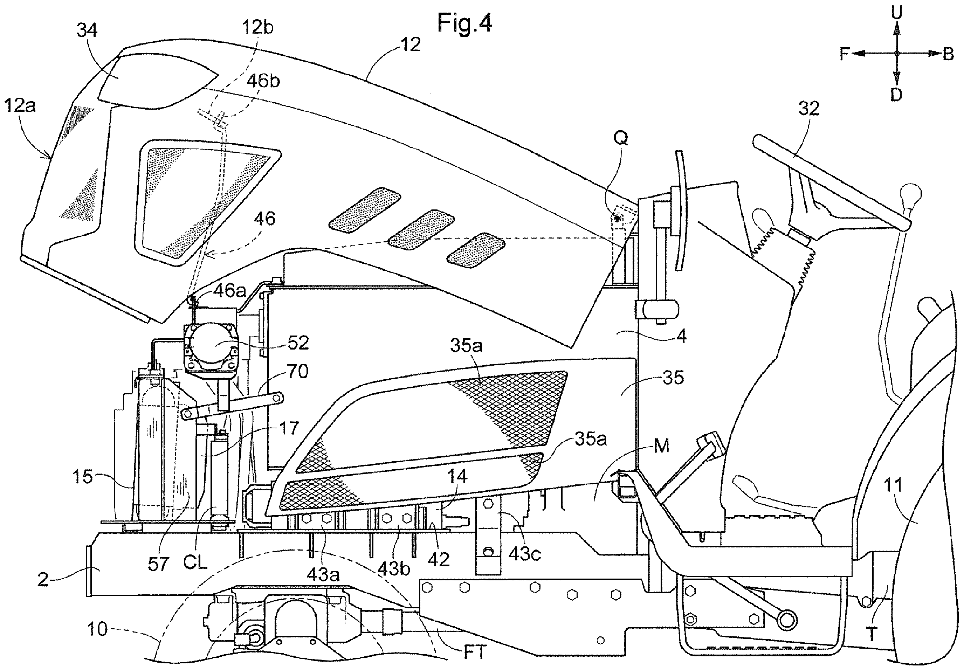

The cover member 12 is pivotable about an opening and closing axis Q (see FIGS. 2 and 4) (corresponding to a "horizontal axis" and a "pivot axis" according to the present invention) extending in the lateral direction of the body. Thus, the cover member 12 is openable and closable.

That is to say, the cover member 12 is openable and closable by being pivoted about the opening and closing axis Q. More specifically, the cover member 12 is openable and closable by being pivoted about the opening and closing axis Q extending in the lateral direction of the body.

As shown in FIG. 2, the opening and closing axis Q is located at a rear portion of the cover member 12.

While the cover member 12 is closed, the travel battery 4 is covered by the cover member 12. That is to say, the tractor A includes the cover member 12 covering the travel battery 4. As shown in FIG. 3, the travel battery 4 extends from the left end to the right end of the space enclosed by the cover member 12. The travel battery 4 supplies electric power to the motor M.

The motor M is disposed below the travel battery 4. The motor M is driven by electric power supplied from the travel battery 4. The driving force of the motor M is transmitted to the transmission device T.

The transmission device T is disposed on the rear side with respect to the travel battery 4 and behind the motor M. The front transmission mechanism FT extends forward from the transmission device T. The transmission device T varies the driving force received from the motor M, and transmits the resulting driving force to the left and right rear wheels 11. The driving force is also transmitted from the transmission device T to the left and right front wheels 10 via the front transmission mechanism FT. Thus, the left and right front wheels 10 and the left and right rear wheels 11 are driven.

That is to say, the tractor A includes the travel battery 4, and the motor M (configured to be) driven by the electric power supplied from the travel battery 4. In addition, the tractor A includes the left and right front wheels 10 and the left and right rear wheels 11 that are (configured to be) driven by the motor M.

As shown in FIG. 1, the tractor A is provided, at a rear portion thereof, with a link mechanism LN. For example, a work device (not illustrated) such as a tiller can be coupled to the link mechanism LN.

The transmission device T is capable of transmitting, to the work device, some of the driving force received from the motor M. Thus, the work device is driven.

With the above-described configuration, the tractor A can perform work using the work device while traveling using the left and right front wheels 10 and the left and right rear wheels 11.

As shown in FIG. 1, the cover member 12 is provided with headlights 34. The headlights 34 is provided at an upper portion of the front portion of the cover member 12.

The body of the tractor A is provided, at a front portion thereof, with left and right side covers 35. Each of the side covers 35 includes a grille 35a through which air can pass. The lower left rear portion and the lower right rear portion of the cover member 12 are cut out to conform to outer shapes of the side covers 35.

As shown in FIGS. 3 and 4, the tractor A includes a support arm 46. While the cover member 12 is closed, the support arm 46 is covered by the cover member 12.

That is to say, the tractor A includes the support arm 46 covered by the cover member 12. As shown in FIG. 4, the cover member 12 includes an arm linkage part 12b.

The support arm 46 is pivotable in the vertical direction about a base end 46a. The support arm 46 has a free end 46b that is brought into contact with the cover member 12 from below by raising the support arm 46 and linking the free end 46b to the arm linkage part 12b while the cover member 12 is open. Thus, the support arm 46 supports the cover member 12 while the cover member 12 is open.

As described above, the support arm 46 is pivotable in the vertical direction about the base end 46a of the support arm 46 and is capable of supporting the cover member 12 while the cover member 12 is open by raising the support arm 46 and bringing the free end 46b of the support arm 46 into contact with the cover member 12 from below.

### Configuration of Front Portion of Body

As shown in FIGS. 2 and 3, the tractor A includes a radiator 15. Also, the tractor A includes a reserve tank 5, an inverter 14, a cooling fan 17, an auxiliary device battery 18, a voltage converter 19, and an oil cooler CL. While the cover member 12 is closed, the reserve tank 5, the radiator 15, the auxiliary device battery 18, the voltage converter 19, and the oil cooler CL are covered by the cover member 12.

The inverter 14 is disposed below the travel battery 4. The inverter 14 converts direct-current power supplied from the travel battery 4 into alternating-current power, and supplies the alternating-current power to the motor M.

The reserve tank 5 can store cooling water.

The radiator 15 and a water pump (not illustrated) are provided on a cooling water path of the tractor A. As a result of the water pump pumping cooling water, the cooling water is circulated along the cooling water path. Then, the cooling water passes through the radiator 15 and is thus cooled.

The cooling fan 17 is disposed behind the radiator 15. The cooling fan 17 sends cooling air rearward. Thus, outside air is inducted into the cover member 12 through an outside air induction section 12a provided at a front portion of the cover member 12, and passes through the radiator 15. As a result, the radiator 15 is cooled.

The auxiliary device battery 18 supplies electric power to various types of auxiliary devices. Also, electric power is transmitted from the travel battery 4 to the voltage converter 19. The voltage converter 19 steps down the electric power supplied from the travel battery 4, and supplies the resulting electric power to the auxiliary device battery 18.

The oil cooler CL cools a hydraulic fluid in the tractor A that passes through the oil cooler CL. As shown in FIG. 2, the travel battery 4 and the inverter 14 are supported by the body frame 2.

Specifically, as shown in FIG. 2, the body frame 2 supports an inverter support part 42. The inverter support part 42 is a horizontally oriented plate-shaped member. The inverter 14 is placed on the inverter support part 42.

Also, as shown in FIG. 2, the inverter support part 42 supports a first support part 43a and a second support part 43b. The body frame 2 supports a third support part 43c. The first support part 43a, the second support part 43b, and the third support part 43c support a battery support part 44. The battery support part 44 is a horizontally oriented plate-shaped member. In addition, the battery support part 44 extends from the left end to the right end of the travel battery 4. The travel battery 4 is placed on the battery support part 44.

The reserve tank 5, the radiator 15, the cooling fan 17, the auxiliary device battery 18, the voltage converter 19, and the oil cooler CL are also supported by the body frame 2.

As shown in FIGS. 2 and 3, the radiator 15 is disposed on the front side (corresponding to a "first side" according to the present invention) with respect to the travel battery 4. In other words, the travel battery 4 is disposed on the rear side (corresponding to a "third side" according to the present invention) opposite to the front side, with respect to the radiator 15.

As shown in FIGS. 2 to 4, the radiator 15 is supported by a radiator frame 57. The radiator frame 57 has a gate shape covering the left and right side portions and the upper portion of the radiator 15.

As described above, the tractor A includes the radiator frame 57 that supports the radiator 15.

### Connection Section, Input Section, and Output Section

As shown in FIGS. 3 to 7, the tractor A includes an input harness 51 (corresponding to an "electric cable" according to the present invention) and a connection section 52.

Also, on the front side portion of the travel battery 4 is provided an input section 50. The connection section 52 is provided at a position adjacent to the front side portion of the travel battery 4. That is to say, the connection section 52 is provided at a position adjacent to the side portion of the travel battery 4 on which the input section 50 is provided.

More specifically, the connection section 52 is provided in front of the travel battery 4 at a position adjacent to the left side portion at the front end of the travel battery 4.

As described above, the connection section 52 is disposed in front of the travel battery 4. However, the present invention is not limited to this configuration. The connection section 52 may also be disposed behind the travel battery 4. That is to say, the connection section 52 is disposed in front of or behind the travel battery 4.

The input harness 51 electrically connects the connection section 52 and the input section 50. That is to say, the tractor A includes the input harness 51 that electrically connects the connection section 52 and the input section 50.

With this configuration, the connection section 52 is electrically connected to the travel battery 4 via the input harness 51 and the input section 50. That is to say, the tractor A includes the input harness 51 that electrically connects the connection section 52 and the travel battery 4.

The connection section 52 is disposed on the lateral side portion of the body and faces sideward of the body. More specifically, the connection section 52 is disposed on the left side portion of the body and faces leftward of the body. More strictly, the connection section 52 faces toward the left upper side with respect to the body.

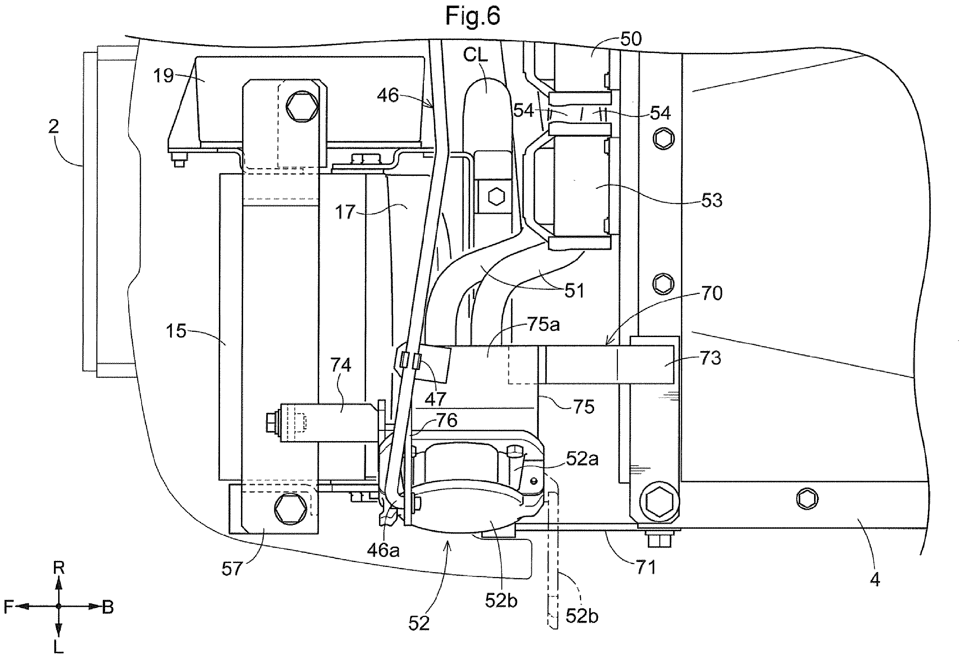

As shown in FIG. 6, the connection section 52 faces leftward in a plan view. In other words, the connection section 52 faces toward a side opposite to the right side (corresponding to a "second side" according to the present invention) in a plan view.

FIG. 2 shows a first upper end position P1. The first upper end position P1 is a position of the upper end of the headlights 34 while the cover member 12 is closed. The connection section 52 is disposed below the first upper end position P1. That is to say, the connection section 52 is disposed below the upper end of the headlights 34.

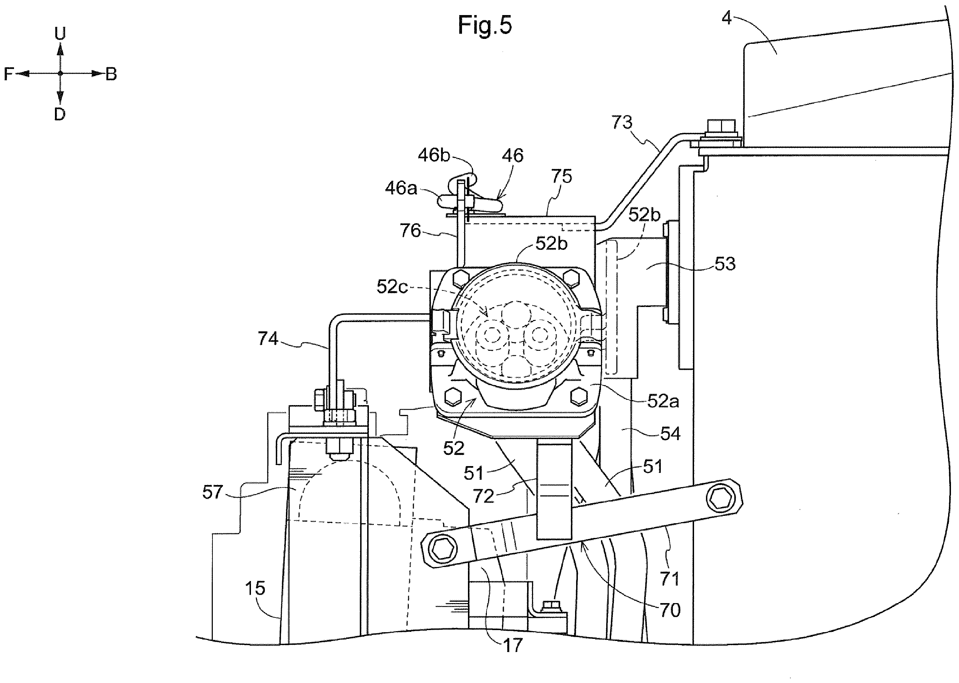

As shown in FIG. 5, the connection section 52 includes a connection terminal section 52c. The connection terminal section 52c is configured to have a charger (not illustrated) provided in a charging facility or the like connected thereto. Note that, although there is no particular limitation on the specifications of the charger and the connection section 52, CHAdeMO may be employed, for example.

Electric power is supplied to the travel battery 4 via the input harness 51 and the input section 50 by connecting the charger to the connection terminal section 52c. Thus, the travel battery 4 is charged.

As described above, the tractor A includes the input section 50 that is provided on a side portion of the travel battery 4 and to which electric power to the travel battery 4 is input. Also, the tractor A includes the connection section 52 to which a charger is connectable. More specifically, the tractor A includes the connection section 52 to which a charger is connectable and that is electrically connected to the travel battery 4.

As shown in FIGS. 1 and 2, the connection section 52 is covered by the cover member 12 while the cover member 12 is closed.

As shown in FIG. 4, the connection section 52 does not overlap the cover member 12 in a side view while the cover member 12 is open. That is to say, the connection section 52 is exposed while the cover member 12 is open.

As shown in FIGS. 5 to 8, the connection section 52 includes a housing 52a and a lid 52b. The connection terminal section 52c is housed by the housing 52a and the lid 52b.

The lid 52b covers the connection terminal section 52c from the left side of the body. As shown in FIGS. 5, 6, and 8, the lid 52b is openable and closable.

As described above, the connection section 52 includes the connection terminal section 52c to which a charger is connectable, and the lid 52b that covers the connection terminal section 52c and is openable and closable.

In FIGS. 5, 6, and 8, the closed lid 52b is shown by solid lines. Also, the open lid 52b is shown by virtual lines.

The lid 52b is opened by being pivoted rearward about the rear end of the lid 52b. That is to say, the lid 52b is opened by being pivoted toward the travel battery 4. In other words, the lid 52b is opened by being pivoted toward the opening and closing axis Q.

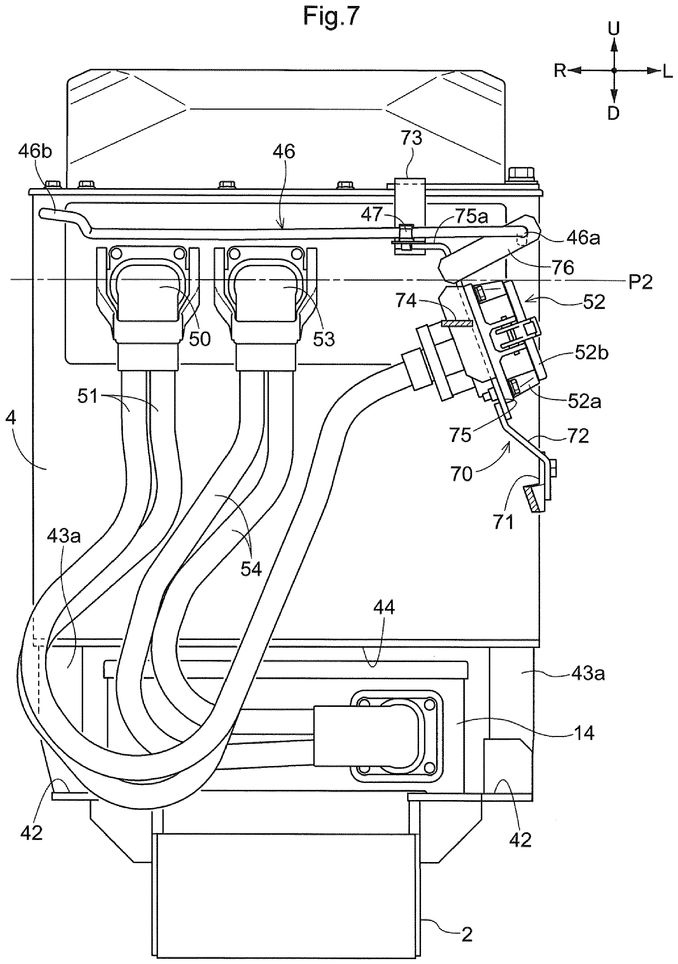

As shown in FIGS. 6 and 7, on the front side portion of the travel battery 4 is provided an output section 53. The output section 53 is disposed adjacent to the left side of the input section 50. The output section 53 is electrically connected to the inverter 14 via an output harness 54.

Electric power from the travel battery 4 is supplied to the inverter 14 via the output section 53 and the output harness 54.

### Arrangement of Input Harness and Output Harness

As shown in FIGS. 3 and 7, the input harness 51 and the output harness 54 are disposed on the front side with respect to the travel battery 4 and on the right side with respect to the connection section 52. Thus, as shown in FIGS. 3 and 6, the input harness 51 and the output harness 54 do not overlap the travel battery 4 in a plan view.

As described above, the input harness 51 does not overlap the travel battery 4 in a plan view.

As shown in FIG. 3, the input harness 51 and the output harness 54 are disposed within an arrangement region AR (corresponding to a "region" according to the present invention) in a plan view. The arrangement region AR is a region that is located on the front side with respect to the travel battery 4 and on the right side with respect to the connection section 52. As described above, in a plan view, the input harness 51 is disposed within the arrangement region AR that is located on the front side with respect to the travel battery 4 and on the right side with respect to the connection section 52. In other words, in a plan view, the input harness 51 is disposed so as not to protrude outside the arrangement region AR.

FIG. 3 shows a rear end position RE. The rear end position RE is a position of the rear end of the radiator 15. The input harness 51 and the output harness 54 are disposed within a region on the rear side with respect to the rear end position RE in a plan view. Also, the connection section 52 is disposed on the rear side with respect to the rear end position RE in a plan view.

That is to say, in a plan view, the input harness 51 is disposed within a portion of the arrangement region AR that is located on the rear side with respect to the radiator 15. In other words, in a plan view, the input harness 51 is disposed so as not to protrude outside a portion of the arrangement region AR that is located on the rear side with respect to the radiator 15.

FIG. 7 shows a second upper end position P2. The second upper end position P2 is a position of the upper end of the connection section 52. The input harness 51 and the output harness 54 are disposed within a region below the second upper end position P2.

That is to say, the input harness 51 is disposed within a region below the upper end of the connection section 52. In other words, the input harness 51 is disposed so as not to protrude upward from the upper end of the connection section 52.

### Support Structure for Connection Section

As shown in FIGS. 5 and 6, the tractor A includes a support member 70 extending from the travel battery 4. The connection section 52 is supported by the support member 70. The following specifically describes the support member 70.

The support member 70 includes a first stay 71, a second stay 72, a third stay 73, a fourth stay 74, and a fifth stay 75.

The first stay 71 extends forward from the travel battery 4. The rear end of the first stay 71 is coupled to the front end of the left side portion of the travel battery 4. The front end of the first stay 71 is coupled to the left portion of the radiator frame 57.

That is to say, the support member 70 is coupled to the radiator frame 57.

The second stay 72 extends upward from the intermediate portion of the first stay 71. The upper end of the second stay 72 is coupled to the fifth stay 75.

The third stay 73 extends toward the front lower side from the travel battery 4. The rear end of the third stay 73 is coupled to the upper portion of the left front portion of the travel battery 4. The front end of the third stay 73 is coupled to the fifth stay 75.

One end of the fourth stay 74 is coupled to the upper portion of the radiator frame 57. The other end of the fourth stay 74 is coupled to the fifth stay 75.

With the configuration above, the fifth stay 75 is supported by the second stay 72, the third stay 73, and the fourth stay 74. The fifth stay 75 supports connection section 52.

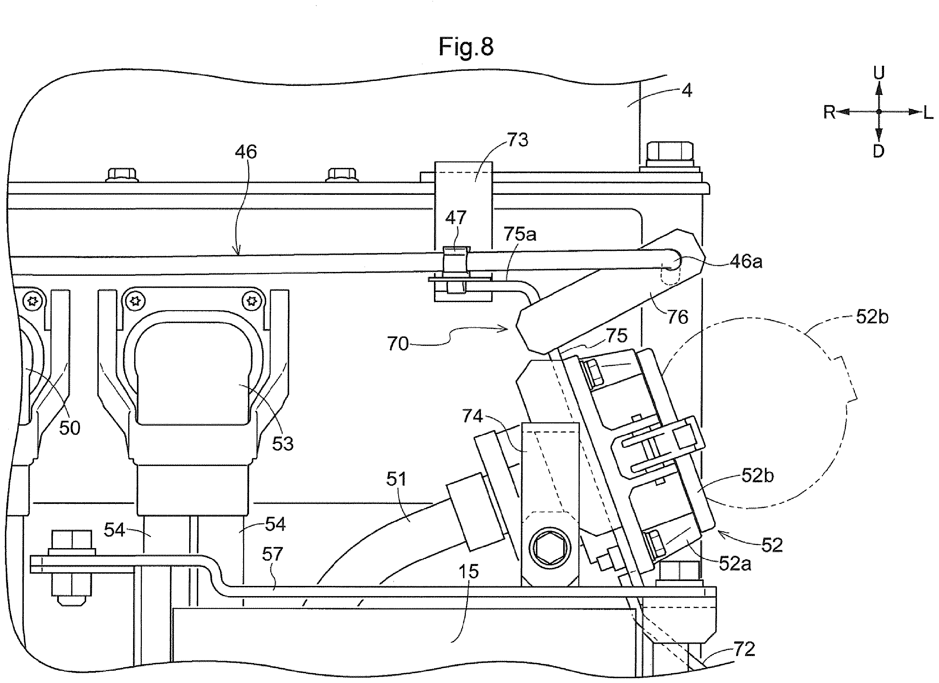

As shown in FIGS. 6 and 8, the fifth stay 75 includes an eaves portion 75a. The eaves portion 75a is an eaves-like portion of the fifth stay 75 and is located above the left end of the input harness 51.

As described above, the support member 70 includes the eaves-like portion located above the input harness 51.

As shown in FIGS. 6 and 8, the support member 70 includes a sixth stay 76. The sixth stay 76 extends toward the left upper side from the fifth stay 75. The base end 46a of the support arm 46 is connected to the extending end of the sixth stay 76, and these ends connected to each other are rotatable relative to each other. Thus, the base end 46a of the support arm 46 is supported by the support member 70.

With this configuration, both the connection section 52 and the base end 46a of the support arm 46 are disposed at a left front portion of the body of the tractor A. Accordingly, the operator can easily perform the following operations without significantly change his/her standing location: opening the cover member 12, operating the support arm 46 such that the cover member 12 is supported by the support arm 46, opening the lid 52b, and connecting a charger to the connection terminal section 52c.

Also, the eaves portion 75a supports a holding section 47. The holding section 47 clamps the support arm 46 and holds the support arm 46 in a horizontal orientation. The operator can remove the support arm 46 from the holding section 47 and raise the support arm 46.

With the above-described configuration, the distance between the connection section 52 and the input section 50 is easily reduced compared to a configuration in which the connection section 52 is disposed near a portion on an opposite side to the side portion of the travel battery 4 on which the input section 50 is provided in the front-rear direction of the body. Accordingly, the length of the input harness 51 can be relatively easily reduced.

Therefore, with the above-described configuration, it is possible to realize a tractor A that relatively easily enables a reduction in the length of the input harness 51 electrically connecting the connection section 52 and the input section 50.

Also, with the above-described configuration, the cover member 12 that covers the travel battery 4 protects the connection section 52. Accordingly, the connection section 52 is protected without providing a dedicated protection member to protect the connection section 52. This makes it easy to suppress an increase in production cost.

Therefore, with the above-described configuration, it is possible to realize a tractor A that enables charging of the travel battery 4 using a charger and easily achieves suppression of an increase in production cost.

### Other Embodiments

(1) The tractor A may be a hybrid tractor that includes an engine.
(2) The input harness 51 and the output harness 54 may overlap the travel battery 4 in a plan view.
(3) The connection section 52 may be disposed at a position other than the lateral side portion of the body. For example, the connection section 52 may be disposed at the center of the body in the lateral direction. In addition, the orientation of the connection section 52 can be changed as appropriate.
(4) The arrangement of some or all of the members may be inverted in the lateral direction.
(5) The connection section 52 need not include the lid 52b.
(6) Any mechanism may be applied as the opening and closing mechanism of the lid 52b. For example, the lid 52b may be opened and closed by being slid, or be attachable and detachable.
(7) The lid 52b may be opened by being pivoted away from the travel battery 4.
(8) The lid 52b may be opened by being pivoted away from the opening and closing axis Q.
(9) The input harness 51 and the output harness 54 may protrude outside the arrangement region AR in a plan view.
(10) The travel battery 4 may be disposed on the front side or the left or right side with respect to the radiator 15.
(11) The input harness 51 and the output harness 54 may protrude upward from the upper end of the connection section 52.
(12) The connection section 52 may be disposed leftward or rightward of the travel battery 4.
(13) The cover member 12 may be openable and closable by being slid in the front-rear direction or the vertical direction.
(14) The connection section 52 may be disposed above the upper end of the headlights 34.
(15) The support member 70 need not be provided.
(16) The support member 70 need not be coupled to the radiator frame 57.
(17) The support member 70 need not include the eaves portion 75a.
(18) The base end 46a of the support arm 46 need not be supported by the support member 70.
(19) The connection section 52 need not be covered by the cover member 12 while the cover member 12 is closed.
(20) In the description of the embodiment above, the "first side" according to the present invention corresponds to the front side. However, the present invention is not limited to this configuration, and the "first side" may correspond to the rear side or the left or right side. Similarly, the "third side" may correspond to the front side or the left or right side.
(21) In the description of the embodiment above, the "second side" according to the present invention corresponds to the right side. However, the present invention is not limited to this configuration, and the "second side" may correspond to the left side or the front or rear side.
(22) The opening and closing axis Q need not extend in the lateral direction of the body. For example, the opening and closing axis Q may extend in the front-rear direction of the body.
(23) The connection section 52 need not be provided at a position adjacent to the side portion of the travel battery 4 on which the input section 50 is provided. For example, in the embodiment above, the connection section 52 may be disposed behind the travel battery 4.

Note that the configurations disclosed in the embodiment described above (including alternative embodiments; the same applies below) are applicable in combination with the configurations disclosed in the other embodiments so long as no inconsistencies arise. The embodiments disclosed herein are illustrative, and embodiments of the present invention are not limited thereto. Appropriate changes and modifications may be made without departing from the scope and sprit of the present invention.

### Industrial Applicability

The present invention is applicable not only to a tractor, but also to various electric work vehicles such as a combine, a rice planter, and a construction machine.

### Description of Reference Signs

3: Driving section
4: Travel battery (battery)
10: Front wheel (travel device)
11: Rear wheel (travel device)
12: Cover member
15: Radiator
34: Headlight
46: Support arm
46a: Base end
46b: Free end
50: Input section
51: Input harness (electric cable)
52: Connection section
52b: Lid
52c: Connection terminal section
57: Radiator frame
70: Support member
A: Tractor (electric work vehicle)
AR: Arrangement region (region)
M: Motor
Q: Opening and closing axis (horizontal axis, pivot axis)

## Claims

1. An electric work vehicle comprising:
- a battery;
- a motor configured to be driven by electric power supplied from the battery;
- a travel device configured to be driven by the motor;
- an input section provided on a side portion of the battery, and configured to receive electric power to be supplied to the battery;
- a connection section to which a charger is connectable; and
- an electric cable electrically connecting the connection section and the input section, the connection section being provided at a position adjacent to the side portion of the battery on a side on which the input section is provided.

2. The electric work vehicle according to claim 1, wherein the electric cable does not overlap the battery in a plan view.

3. The electric work vehicle according to claim 1 or 2, wherein the connection section is disposed on a lateral side portion of a body and faces sideward of the body.

4. The electric work vehicle according to any one of claims 1 to 3, wherein the connection section includes a connection terminal section to which a charger is connectable, and a lid that covers the connection terminal section and is openable and closable.

5. The electric work vehicle according to claim 4, wherein the lid is opened by being pivoted toward the battery.

6. The electric work vehicle according to claim 4 or 5, further comprising:
- a cover member covering the battery,
wherein the cover member is openable and closable by being pivoted about a horizontal axis, and
the lid is opened by being pivoted toward the horizontal axis.

7. The electric work vehicle according to any one of claims 1 to 6,
- wherein the input section is provided on a side portion of the battery on a first side,
- the connection section faces toward a side opposite to a second side in a plan view, and
- the electric cable is disposed within a region on the first side with respect to the battery and on the second side with respect to the connection section in a plan view.

8. The electric work vehicle according to claim 7, further comprising:
- a radiator,
- wherein the battery is disposed on a third side corresponding to a side opposite to the first side with respect to the radiator, and
- the electric cable is disposed within a portion of the region on the third side with respect to the radiator in a plan view.

9. The electric work vehicle according to any one of claims 1 to 8, wherein the electric cable is disposed within a region below an upper end of the connection section.

10. An electric work vehicle comprising:
- a battery;
- a motor configured to be driven by electric power supplied from the battery;
- a travel device configured to be driven by the motor;
- a cover member covering the battery; and
- a connection section to which a charger is connectable and that is electrically connected to the battery,
the cover member covering the connection section.

11. The electric work vehicle according to claim 10, further comprising:
- a driving section in which an operator rides, wherein
- the cover member is disposed in front of the driving section,
- the battery extends from a left end to a right end of a space enclosed by the cover member, and
- the connection section is disposed in front of or behind the battery.

12. The electric work vehicle according to claim 10 or 11,
- wherein the cover member is openable and closable by being pivoted about a pivot axis extending in a lateral direction of a body,
- the pivot axis is located at a rear portion of the cover member,
- the connection section is disposed in front of the battery, and
- the connection section is exposed while the cover member is open.

13. The electric work vehicle according to any one of claims 10 to 12, further comprising:
- a driving section in which an operator rides, wherein
- the cover member is disposed in front of the driving section,
- the cover member is provided with a headlight, and
- the connection section is disposed below an upper end of the headlight.

14. The electric work vehicle according to any one of claims 10 to 13, further comprising:
- a support member extending from the battery,
wherein the support member supports the connection section.

15. The electric work vehicle according to claim 14, further comprising:
- a radiator; and
- a radiator frame supporting the radiator,
wherein the support member is coupled to the radiator frame.

16. The electric work vehicle according to claim 14 or 15, further comprising:
- an electric cable electrically connecting the connection section and the battery, wherein the support member includes an eaves-like portion located above the electric cable.

17. The electric work vehicle according to any one of claims 14 to 16,
- wherein the cover member is openable and closable by being pivoted about a pivot axis extending in a lateral direction of a body,
- the electric work vehicle further includes a support arm covered by the cover member,
- the support arm is pivotable in a vertical direction about a base end of the support arm and is capable of supporting the cover member while the cover member is open by raising the support arm and bringing a free end of the support arm into contact with the cover member from below, and
- the base end of the support arm is supported by the support member.
